# EUROPEAN PATENT SPECIFICATION

(11) **EP 3 248 510 B1**
(45) Date of publication and mention of the grant of the patent: **09.10.2019**
(21) Application number: 16740311.2
(22) Date of filing: 22.01.2016
(51) Int. Cl.: A47C 27/00, A47C 7/34, C08K 3/22, C08L 25/02, C08L 91/00

(54) **FLAME-RESISTANT THREE-DIMENSIONAL LATTICE-SHAPED CUSHION**
FLAMMWIDRIGES DREIDIMENSIONALES GITTERFÖRMIGES KISSEN
COUSSIN EN FORME DE TREILLIS TRIDIMENSIONNEL IGNIFUGE

(30) Priority: 23.01.2015 JP 2015011827
(43) Date of publication of application: 29.11.2017
(73) Proprietor: Pacific Wave Co., Ltd., Maizuru-shi, Kyoto 624-0823 (JP)
(72) Inventor: TANAKA, Keisuke, Maizuru-shi, Kyoto 624-0926 (JP); TSUNODA, Nobuhiro, Yosa-gun, Kyoto 629-2311 (JP)
(74) Representative: Hoffmann Eitle
(86) International application number: PCT/JP2016/051931
(87) International publication number: WO 2016/117704

(56) References cited:
- WO-A1-2015/002263
- WO-A1-2015/002263
- JP-A- 2000 217 658
- JP-A- 2008 264 487
- JP-U- 3 140 168
- JP-U- 3 140 168
- US-A1- 2014 363 611

## Description

### Technical Field

The present invention relates to a flame-retardant three-dimensional lattice-shaped cushion used for a seat, a bed, or the like.

### Background Art

In a cushion used for a seat, a bed, or the like, comfort is required in addition to the function to support and hold the human body weight. For a comfortable cushion, as a mechanical property, it is required to have moderate softness and compressibility, a vibration absorbing property, a dehumidifying performance, deformation followability, and no settling. Further, in a case where the cushion is used for a seat of a vehicle, it is necessary to emphasize the safety in case of fire, and it is also required to have a function of flame retardancy.

In Patent Literature 1, a shaped body having the mechanical properties required for the cushion has been disclosed. According to Patent Literature 1, an integrated convexity has an active element, therefore, the mechanical properties can be improved, but the shaped body did not fully satisfy the mechanical properties as a cushion to be used for a seat, a bed or the like.

Further, as a cushion with further improved mechanical properties, the one in which partition walls are arranged side by side in a lattice pattern has been developed, as disclosed in Patent Literature 2.

Furthermore, in Patent Literature 3, a cushion having excellent mechanical properties, which has both durability and followability by making the structures in the upper layer portion and the lower layer portion different from each other, has been disclosed.

### Citation List

### Patent Literature

Patent Literature 1: JP 2001-514911 A
Patent Literature 2: JP 52-15307 Y
Patent Literature 3: Japanese Utility Model Registration No. 3140168

WO 2015/002263 A1 discloses a silane crosslinked resin molded article which is used as an insulator or sheath for an electric wire.

### Summary of Invention

### Technical Problem

However, in the above-described Patent Literatures, it has not been investigated to impart the flame retardancy to a cushion used for a seat, a bed, or the like, and there has been existed no cushion which has also a function of sufficient flame retardancy while retaining the mechanical properties required for a cushion. Therefore, an object of the present invention is to provide a flame-retardant three-dimensional lattice-shaped cushion having the moderate softness required for a cushion and having the excellent mechanical properties such as compressibility, vibration absorbency, a dehumidifying performance, deformation followability, and no settling, while being provided with the sufficient flame retardancy.

### Solution to Problem

The present inventors have made intensive studies to solve the problem described above. As a result, the present inventors have found that by employing a specific viscoelastic elastomer compound in a cushion having a specific structure, the sufficient flame retardancy and the mechanical properties as a cushion can be both satisfied, and thus has completed the present invention. That is, the present invention is as follows.

A flame-retardant three-dimensional lattice-shaped cushion according to the invention is recited in claim 1. Preferential embodiments are set out in the dependent claims.

### Advantageous Effects of Invention

According to the present invention, a flame-retardant three-dimensional lattice-shaped cushion having the moderate softness required for a cushion and having the mechanical properties such as compressibility, vibration absorbency, a dehumidifying performance, deformation followability, and no settling, while being provided with the sufficient flame retardancy can be provided.

### Brief Description of Drawings

Fig. 1 is a drawing showing the first structural example of the present invention.
Fig. 2 is a drawing showing the second structural example of the present invention.
Fig. 3 is a drawing showing the third structural example of the present invention.
Fig. 4 is a drawing showing a result of the measurement of body pressure dispersion in a cushion body having a space structure made of one layer of lattice walls in a honeycomb pattern.
Fig. 5 is a drawing showing a result of the measurement of the body pressure dispersion in a cushion body to which a structure of the present invention is applied.
Fig. 6 is a drawing showing examples of the behavior in a case where large twist (shear force) acts on lattice walls.
Fig. 7 is a picture showing an overall overview of a cushion body of the present invention in a followability test.
Fig. 8 is pictures showing a constitution of a seat of a cushion body of the present invention in a followability test.

### Description of Embodiments

The flame-retardant three-dimensional lattice-shaped cushion according to a preferred embodiment of the present invention will be described in the following order.
1) Material of flame-retardant three-dimensional lattice-shaped cushion
   1-1) Component of viscoelastic elastomer compound
   1-2) Production method of viscoelastic elastomer compound
   1-3) Characteristics of viscoelastic elastomer compound
   1-4) Physical properties of viscoelastic elastomer compound
2) Structure of flame-retardant three-dimensional lattice-shaped cushion
3) Production method of flame-retardant three-dimensional lattice-shaped cushion
4) Physical properties of flame-retardant three-dimensional lattice-shaped cushion
5) Action and effect of flame-retardant three-dimensional lattice-shaped cushion
6) Use method of flame-retardant three-dimensional lattice-shaped cushion

### «Material of flame-retardant three-dimensional lattice-shaped cushion»

### <Component of viscoelastic elastomer compound>

### (Component)

### • Styrene-based thermoplastic elastomer

The styrene-based thermoplastic elastomer used for the present invention is not particularly limited. Specific examples of the styrene-based thermoplastic elastomer in the embodiment of the present invention include polystyrene-poly(ethylene/propylene) block (SEP), polystyrene-poly(ethylene/propylene) block-polystyrene (SEEPS), SBS (styrene-butadiene-styrene copolymer), SEBS (styrene-ethylene-butadiene-styrene copolymer), SEBC (styrene-ethylene-butadiene-high crystalline ethylene copolymer), and SEPS (styrene-ethylene-propylene-styrene copolymer). Further, these may be triblock or diblock. However, although the reason is not clear, the degree of impairment of the properties originally possessed by these elastomers is lower as compared with that of diblock when a flame retardant or a flame retardant auxiliary is added, therefore, the triblock is preferred. These can be used singly or also by mixing two or more kinds thereof.

The weight average molecular weight of the styrene-based thermoplastic elastomer used for the present invention is preferably 100,000 to 500,000, more preferably 150,000 to 400,000, and most preferably 200,000 to 350,000. When the weight average molecular weight is 100,000 or more, the formability is improved, and when the weight average molecular weight is 500,000 or less, high followability as a structure can be satisfied. Herein, the expression "weight average molecular weight" means a weight average molecular weight in terms of polystyrene measured by gel permeation chromatography (GPC). The measurement conditions are as follows.
Eluent: tetrahydrofuran (THF), sample concentration (THF solution): 0.1% (W/V), column: G4000H_{XL} + G2000H_{XL} + G1000H_{XL} (manufactured by TOSOH CORPORATION, each has 7.8 mmφ × 300 cm), column temperature: 40°C, and detector: refractive index detector (RI).

The styrene content of the styrene-based thermoplastic elastomer used for the present invention is preferably 15 to 50% by weight, more preferably 20 to 40% by weight, and most preferably 25 to 35% by weight. When the styrene content satisfies this range, the appropriate hardness as a cushion can be obtained. In addition, as described later, also in the relation to an aromatic ring of a bromine-based flame retardant matter, the mechanical properties such as flexibility, and plasticity can be provided. The styrene content described in the present invention can be measured by a general method. For example, the styrene content can be measured by using an ultraviolet spectrophotometer or ¹H-NMR spectroscopy.

### • Oil

The oil used for the present invention is not particularly limited. A synthetic oil can also be used other than mineral oils. The oil is preferably made of a mineral oil such as a naphthene-based oil, or a paraffin-based oil. However, in the system of the present invention in which a styrene-based thermoplastic elastomer, a brominated flame retardant, and antimony trioxide are combined, although the reason is not clear, it is preferred to use a paraffin-based oil as compared with other oils because the effect of the present invention is more enhanced. The paraffin-based oil is used as a plasticizer or a softening agent of a thermoplastic elastomer, or the like. Even when any of a naphthene-based oil, a paraffin-based oil, a synthetic oil, or an oil being a mixture thereof is used, the effect as the plasticizer or softening agent described above is similarly obtained.

### • Brominated flame retardant

The flame retardant used for the present invention is a brominated flame retardant. Examples of the brominated flame retardant include hexabromocyclododecane (HBCD), hexabromobenzene, decabromodiphenyl oxide (DBDPO), octabromodiphenyl oxide, tetrabromobisphenol A (TBBA), bis(tribromophenoxy)ethane, bis(pentabromophenoxy)ethane (BPBPE), tetrabromobisphenol A epoxy resin (TBBA epoxy), tetrabromobisphenol A carbonate (TBBA-PC), ethylene(bistetrabromophthal)imide (EBTBPI), ethylenebispentabromodiphenyl, tris(tribromophenoxy)triazine (TTBPTA), bis(dibromopropyl)tetrabromobisphenol A (DBP-TBBA), bis(dibromopropyl)tetrabromobisphenol S (DBP-TBBS), tetrabromobisphenol S (TBBS), tris(tribromoneopentyl)phosphate (TTBNPP), polybromotrimethylphenylindane (PBPI), and tris(dibromopropyl)-isocyanurate (TDBPIC). These flame retardants can be used alone or by mixing two or more kinds thereof.

As the brominated flame retardant used for the present invention, a component containing an aromatic ring having multiple bromine atoms in the molecular structure is preferred. It is presumed that the brominated flame retardant is bonded to the hard block portion of the styrene-based thermoplastic elastomer by the interaction between the aromatic ring in the molecular skeleton of the styrene-based thermoplastic elastomer and the aromatic ring of the brominated flame retardant (that is, the amount of the plasticizer and flame retardant dispersed on the plasticizer side can be relatively reduced), therefore, the amount of the flame retardant to be used can be reduced, as a result of which, the flame retardancy can be imparted without impairing the original physical properties (viscoelasticity, elasticity, durability, and the like) of a three-dimensional lattice-shaped cushion made of a viscoelastic elastomer compound. In addition, the content of bromine is preferably 60% by mass (a theoretical value to the whole molecular weight) or more.

### (Influences of benzene ring on mechanical properties of cushion)

Further, in addition to the above-described mechanism, as a result of relatively reducing the content of brominated flame retardant, the content of the aromatic rings of which the structure itself is rigid can be reduced as a whole, while the sufficient flame retardancy can be imparted. As a result, it is presumed that in a case where the brominated flame retardant is applied as a structure to a cushion or the like, both of the desired mechanical properties and the flame retardancy can be realized.

As the brominated flame retardant used for the present invention, it is preferred that the melting point of the brominated flame retardant is higher than the melting point of the styrene-based thermoplastic elastomer. This is because in a case where the melting point is lower than the melting point of the styrene-based thermoplastic elastomer, there is a case where the effect as a flame retardant cannot be exerted. The melting point can be measured by a general method. For example, the melting point can be measured as the temperature of the melting peak when the temperature is increased at a temperature elevation rate of 10°C/min using a differential scanning calorimeter.

With regard to the flame retardancy of the present invention, in consideration of the application to an automobile seat, it is preferred that FMVSS No. 302, which is a standard for interior materials for automobiles in the United States, is satisfied.

The present invention contains antimony trioxide that is an inorganic flame retardant as a flame retardant auxiliary together with a flame retardant. The flame retardancy can be enhanced when the antimony trioxide is used in combination with a brominated flame retardant. Further, in addition to the antimony trioxide, other flame retardant auxiliaries can be used in combination. Examples of the flame retardant auxiliary include an antimony compound such as antimony tetroxide, antimony pentoxide, sodium pyroantimonate, antimony trichloride, antimony trisulfide, antimony oxychloride, antimony dichloride perchloropentane, and potassium antimonate; a boron compound such as zinc metaborate, zinc tetraborate, zinc borate, and basic zinc borate; zirconium oxide; tin oxide; and molybdenum oxide. Antimony tetroxide, antimony pentoxide, antimony trichloride, antimony trisulfide, and zinc borate are preferred.

### • Other components

Further, in the viscoelastic elastomer compound of the present invention, within the range not impairing the object of the present invention, a known additive agent such as a heat stabilizer, an antioxidant, a light stabilizer, an ultraviolet absorbent, a nucleating agent, an antiblocking agent, a sealing improver, a release agent including stearic acid, a silicone oil, or the like, a lubricant including polyethylene wax, or the like, a coloring agent, pigment, an inorganic filler including alumina, or the like, and a blowing agent (organic, inorganic, and microcapsule) can be mixed.

### <Mixing ratio of each component>

### (Mixing ratio of styrene-based thermoplastic elastomer)

In the viscoelastic elastomer compound of the present invention, based on the total composition, preferably 5 to 30% by weight of a styrene-based thermoplastic elastomer component is contained, and more preferably 10 to 20% by weight of a styrene-based thermoplastic elastomer component is contained. It is considered that when the styrene-based thermoplastic elastomer component is 5% by weight or more, the formability is improved, and when the styrene-based thermoplastic elastomer component is 30% by weight or less, the sufficient heat resistance can be obtained.

### (Mixing ratio of oil)

In the viscoelastic elastomer compound of the present invention, based on the total composition, 30 to 80% by weight of an oil component is contained, and preferably 40 to 70% by weight of an oil component is contained. It is considered that when the oil component is 30% by weight or more, the desired flexibility and compressibility are obtained, and when the oil component is 80% by weight or less, the sufficient formability is obtained.

### (Mixing ratio of styrene-based thermoplastic elastomer and oil component)

As to the weight ratio of the oil and styrene-based thermoplastic elastomer contained in the viscoelastic elastomer compound of the present invention, the styrene-based thermoplastic elastomer is contained preferably 0.10 to 0.50, and more preferably 0.15 to 0.35 based on the oil. It is anticipated that when the styrene-based thermoplastic elastomer is 0.10 or more, the formability is improved, and when the styrene-based thermoplastic elastomer is 0.50 or less, the sufficient heat resistance can be possessed.

### (Mixing ratio of flame retardant component)

In the viscoelastic elastomer compound of the present invention, based on the total weight of the oil and the styrene-based thermoplastic elastomer, preferably a brominated flame retardant in a weight ratio of 0.10 to 0.40 and antimony trioxide in a weight ratio of 0.03 to 0.15 are contained, and more preferably a brominated flame retardant in a weight ratio of 0.20 to 0.30 and antimony trioxide in a weight ratio of 0.06 to 0.10 are contained. Originally, a material such as an oil, and a styrene-based thermoplastic elastomer, which are constituent materials of the viscoelastic elastomer compound, has a flammable nature, therefore, by imparting the flame retardancy, the viscoelasticity, elasticity, and durability, which are possessed by the material, tend to be inhibited. In addition to that, in order to satisfy the mechanical properties required for a cushion, extremely minute preparation is required. For example, in order to maintain the durability upon commercializing as a cushion, it is required that the result of the repeated compression set test described later satisfies a predetermined value. For this purpose, in addition to the selection of the above-described flame retardant material, the selection of the mixing ratio of the above-described four main components (an oil, a styrene-based thermoplastic elastomer, a brominated flame retardant, and antimony trioxide) becomes also important. Herein, by setting the brominated flame retardant and the antimony trioxide, which are flame retardant materials, to the above-described upper limit ratio or less, the quality required in a test of the repeated compression set test is satisfied. Conversely, by setting the brominated flame retardant and the antimony trioxide to the lower limit value or more, a case of easily burning is hardly generated.

### (Ratio of other components)

The mixing ratios of other components are not particularly limited. Within the range not impairing the effect required by the present invention, other components such as an additive agent and the like can be contained.

### «Production method of viscoelastic elastomer compound»

Examples of the melt-kneading device used for obtaining the viscoelastic elastomer compound of the present invention include an open-type mixing roll, a non-open type Bunbury mixer, an extruder, a kneader, and a continuous mixer. In addition, in the melt-kneading, all of the components to be kneaded may be melt-kneaded collectively, or part of the components is kneaded, and then the other components may be added and kneaded, and melt-kneaded, and the melt-kneading may be performed once or twice or more. In order to improve the kneading state, it is preferred to use a twin screw extruder. The viscoelastic elastomer compound may melt at a temperature lower than the glass transition point of the styrene-based thermoplastic elastomer, the higher the temperature is, the lower the melt viscosity is, and the mixing becomes easier, but when the temperature is extremely high, the thermal decomposition may be generated. It is preferred that the temperature in the melt kneading is usually 100 to 250°C, and the time is usually 1 to 30 minutes. The temperature and the melt kneading time can be appropriately adjusted depending on the application.

### <<Characteristics of viscoelastic elastomer compound>>

The styrene-based thermoplastic elastomer is usually in a rubber state at room temperature, but has thermoplasticity being a characteristic of softening the elastomer and enabling free deformation by the destruction of a crosslinking structure due to the temperature rise. These structures in the viscoelastic elastomer compound in general, at room temperature, adopt a gel (gel) structure in which oil molecules are constituted by being incorporated into the network structure formed by the physical crosslinking by physically crosslinking the styrene block portion. The gel that incorporates such an organic matter is generally classified as an organogel.

### <<Physical properties of viscoelastic elastomer compound>>

### <Flammability test>

The flame retardancy of the viscoelastic elastomer compound of the present invention is evaluated in accordance with FMVSS (Federal Motor-Vehicle Safety Standard) No. 302 Fire testing. The criteria of the flame retardancy can be appropriately changed depending on the application, but the burning rate is preferably 150 mm/min or less, more preferably 102 mm/min or less, and most preferably 80 mm/min or less. In a case of an automobile seat, which is a preferable application of the present invention, the burning rate is preferably 102 mm/min or less. This is to ensure the sufficient time to escape when the vehicle is in case of a fire.

As a method for measuring the physical property values of the viscoelastic elastomer compound of the present invention, which are the physical property values required for realizing excellent mechanical properties as a cushion (the followability. absorbability of twist, and the prevention of deformation, settling, and the like of longitudinal and lateral partition walls) in a case of a structure having a three-dimensional lattice shape, the following three tests can be mentioned.

### <Tensile strength test>

In the tensile strength test, in accordance with JIS K 6251: 2010 "Rubber, vulcanized or thermoplastics - Determination of tensile stress-strain properties", the tensile strength (MPa) that is the maximum stress leading to cutting is measured with a "No. 3 dumbbell shape" as the shape of the test piece. The tensile strength in the viscoelastic elastomer compound of the present invention is preferably 0.8 MPa or more, and more preferably 1.2 MPa or more. By having a tensile strength of 0.8 MPa or more, in particular, the characteristics of the durability, and the followability. absorbability can be improved.

### <Elongation at break test>

In the tensile strength test, in accordance with JIS K 6251: 2010 "Rubber, vulcanized or thermoplastics - Determination of tensile stress-strain properties", the elongation at break (%) is measured with a "No. 3 dumbbell shape" as the shape of the test piece. The tensile strength in the viscoelastic elastomer compound of the present invention is preferably 850% or more, and more preferably 1000% or more. By having a tensile strength of 850% or more, in particular, the characteristics of the durability, and the followability · absorbability can be improved.

### <Tear strength test>

In the tear strength test, in accordance with JIS K 6252: 2007 "Rubber, vulcanized or thermoplastics - Determination of tear strength", the tear strength (kN/m) is measured with a "crescent shape" as the shape of the test piece. The tensile strength in the viscoelastic elastomer compound of the present invention is preferably 8.0 kN/m or more, and more preferably 10.0 kN/m or more. By having a tensile strength of 8.0 kN/m or more, the characteristics of, in particular, the durability can be improved.

### «Structure of flame-retardant three-dimensional lattice-shaped cushion»

In the cushion according to the present embodiment, a lattice body having a polygonal honeycomb-shaped structure is formed by continuous lattice walls made of a viscoelastic elastomer compound, and with the constitution in which the compressibility in the vertical direction, the flexibility, and the buckling property are set differently, the compressibility, flexibility, and buckling property of the honeycomb-shaped structure in the upper layer are set to be large, the compressibility, flexibility, and buckling property of the honeycomb-shaped structure in the lower layer are set to be small, the followability to a small load is improved in the upper layer, a function to prevent the sinking as in a feeling of bottom fitting due to a load in the lower layer is provided to improve sleeping comfort, and a load of a person who is required to lie in bed for a long time, such as a sick person, a person in need of care, or the like is dispersed, and a disorder such as a blood circulation disorder can be prevented.

With the constitution in which a rib made of a viscoelastic elastomer compound with a + shape in plan view (including a square shape such as a × shape, and a # shape), of which the height is approximately half the height of the lattice walls from the bottom, is formed integrally to the inner walls of lattice walls in polygons of a honeycomb-shaped structure constituting the lattice body, the compressibility in the vertical direction, flexibility, and buckling property of a cushion are made differently, the followability to a small load is improved, the sinking as in a feeling of bottom fitting due to a load is prevented, and a cushion excellent in the load dispersibility can be obtained.

With the constitution in which the cross-sectional sizes of the polygons of the honeycomb-shaped structure constituting the lattice body are integrally formed so as to be different in the upper and lower lamination directions, the compressibility in the vertical direction, flexibility, and buckling property of a cushion are made differently, the followability to a small load is improved, the sinking as in a feeling of bottom fitting is prevented, and a cushion excellent in the load dispersibility can be obtained.

With the constitution in which the honeycomb-shaped structure having a small cross-sectional size of the polygon of the honeycomb structure constituting the lattice body, and the honeycomb-shaped structure having a large cross-sectional size of the polygon of the honeycomb structure constituting the lattice body are laminated while fixing only the peripheries of the structures, the central portion of the honeycomb-shaped structure having a large cross-sectional size of a polygon is not fixed, therefore, the force is spread over a wide range while maintaining the comfort of the skin surface while the structure absorbs the motion such as twisting and crushing, which is generated at the time of the movement of turning over in bed, other than the motion in the vertical direction, further, the twisting crushing motion of a polygonal honeycomb-shaped structure having a larger cross-sectional size can be moved not only on the sides but also over a wide range of the honeycomb-shaped structure, therefore, the load dispersibility is further improved, a cushion that is comfortable to sleep in, and capable of preventing a blood circulation disorder can be provided.

A lattice body having a polygonal honeycomb-shaped structure is formed by continuous lattice walls, and with the constitution in which the compressibility in the vertical direction, the flexibility, and the buckling property are set differently, the compressibility, flexibility, and buckling property of the honeycomb-shaped structure in the upper layer are set to be small, the compressibility, flexibility, and buckling property of the honeycomb-shaped structure in the lower layer are set to be large, the stress on the skin is reduced by increasing the contact area of the skin in the upper layer, the followability to the movement of shifting · twisting in a direction other than the vertical direction in the lower layer is improved, and the sinking as in a feeling of bottom fitting can be prevented.

The upper layer and the lower layer, which have a honeycomb structure different from each other, are integrally formed, therefore, the tilting distance of the wall due to pressing becomes small, and the user can reduce the feeling of rolling, further the tilting of the longitudinal and lateral partition walls is small, therefore, there is also an effect of preventing the deformation, settling, and the like of the longitudinal and lateral partition walls, which are generated with the use for a long period of time. Furthermore, twist (shear force) generated by the vibration of a vehicle and the body movement is absorbed, and a blood circulation disorder and the like can be prevented.

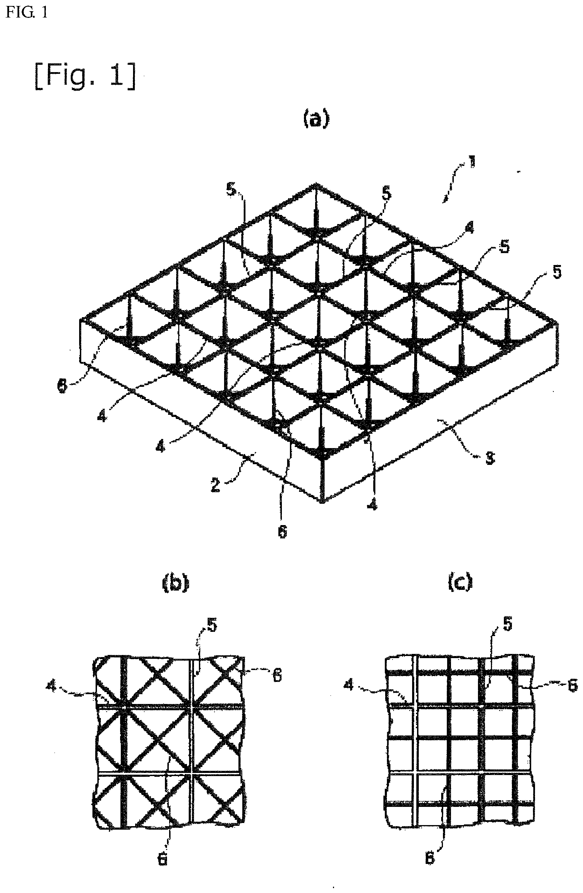

Hereinafter, specific structural examples of the flame-retardant three-dimensional lattice-shaped cushion of the present invention will be described in detail with reference to Figs. 1 to 6.

### <First structural example>

An embodiment according to the structure of the present invention will be described with reference to drawings. Figs. 1(a), 1(b), and 1(c) show the first structural example of the cushion of the present invention. Cushion 1 is selected from an aggregate including an elastomer and a viscoelastic elastomer, and formed by a viscoelastic elastomer compound further containing a flame retardant. The cushion 1 is formed into a honeycomb-shaped structure that is an aggregate of multiple cross sectional rectangular shapes with lateral side walls 2, longitudinal side walls 3, lateral partition walls 4, and longitudinal partition walls 5. The cross-sectional shape of the unit polygon of the honeycomb-shaped structure is not limited to the rectangular shapes shown in Examples, but may be another polygonal shape. A rib 6 with a × shape as shown in Figs. 1(a) and 1(b) or with a + shape as shown in Fig. 1 (c) in plan view, which extends from the bottom of the cross-sectional polygon surrounded by the lateral partition walls 4 and the longitudinal partition walls 5 to the height lower than the heights of the lateral and longitudinal partition walls 4 and 5 of the honeycomb-shaped structure and is formed of a viscoelastic elastomer compound, is formed. Both ends of the rib 6 are integrally connected to the inner walls of the lateral and longitudinal partition walls 4 and 5. The shape of the rib 6 may be any shape as long as the shape is a shape with which the compressibility, flexibility, and buckling property in the vertical direction of the cushion 1 are adequately different. Further, the height from the bottom of the rib 6 can be reduced by making the thickness of the rib 6 thick. By constituting the cushion 1 in this way, the compressibility, flexibility, and buckling property of the portion in which ribs 6 are not formed are larger as compared with the compressibility, flexibility, and buckling property of the portion in which ribs 6 are formed, therefore, the upper portion of the cushion 1 follows even to a small load and disperses the load, and the lower portion of the cushion 1 has smaller compressibility, flexibility, and buckling property as compared with those in the upper portion, therefore, prevents the sinking due to a load.

### <Second structural example>

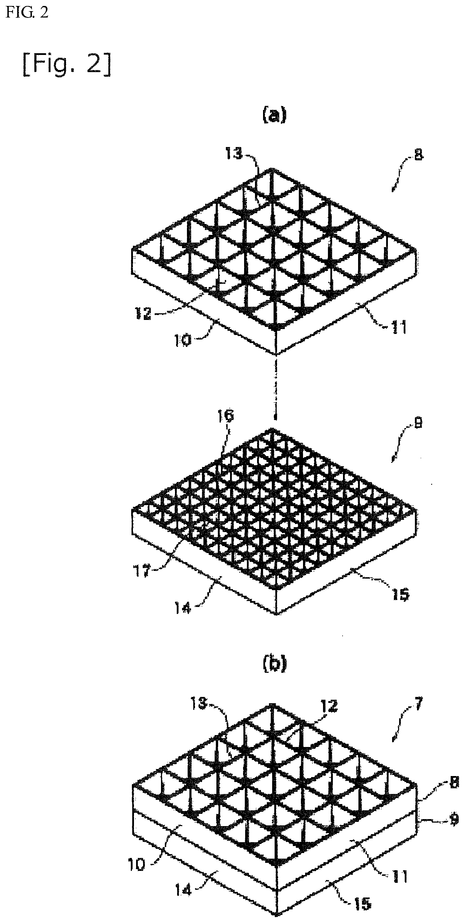

Figs. 2(a), and 2(b) show the second structural example of the cushion of the present invention. The cushion 7 shown in the second structural example is selected from an aggregate including an elastomer and a viscoelastic elastomer, and formed by a viscoelastic elastomer compound further containing a flame retardant. The cushion 7 is constituted of two portions that are the upper and lower portions 8 and 9. As shown in Fig. 2(a), the upper portion 8 of cushion 7 is, in the similar manner as in the cushion 1 of the second structural example, formed into a honeycomb-shaped structure that is an aggregate of multiple cross sectional rectangular shapes with lateral side walls 10, longitudinal side walls 11, lateral partition walls 12, and longitudinal partition walls 13. Further, the lower portion 9 of cushion 7 is formed into a honeycomb-shaped structure that is an aggregate of multiple cross sectional rectangular shapes with lateral side walls 14, longitudinal side walls 15, lateral partition walls 16, and longitudinal partition walls 17. The difference between the upper and lower portions 8 and 9 of cushion 7 is that as to the cross-sectional size of the polygons constituting the honeycomb-shaped structure, the cross-sectional size in the upper portion 8 is formed larger than that in the lower portion 9. As shown in Fig. 2(b), the upper and lower portions 8 and 9 of cushion 7 are integrally formed. By integrally forming the upper and lower portions by making the sectional size of the polygon constituting the honeycomb-shaped structure of the upper portion 8 of cushion 7 larger than the cross-sectional size of the polygon constituting the honeycomb-shaped structure of the lower portion 9, the upper portion 8 of cushion 7 follows even to a small load and disperses the load, and the lower portion 9 of cushion 7 has smaller compressibility, flexibility, and buckling property as compared with those in the upper portion, therefore, prevents the sinking due to a load.

### <Third structural example>

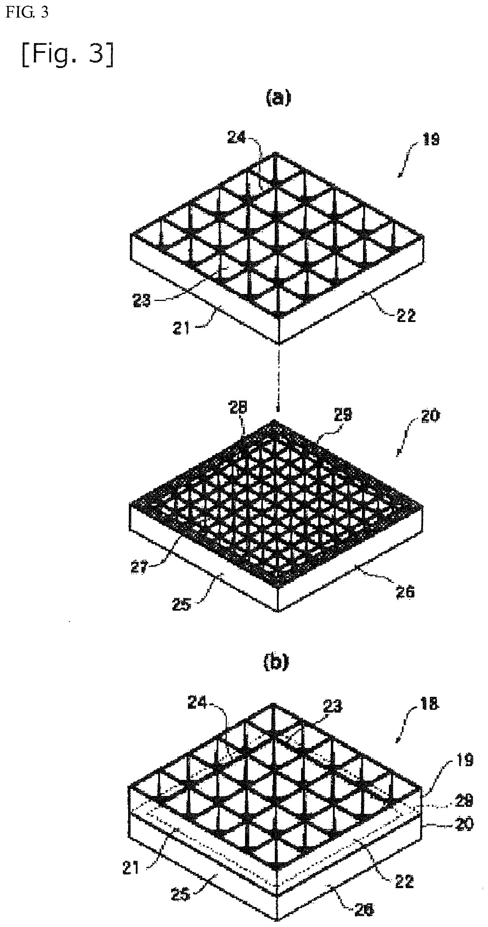

Figs. 3(a), and 2(b) show the third structural example of the cushion of the present invention. The cushion 18 shown in the third structural example is selected from an aggregate including an elastomer and a viscoelastic elastomer, and formed by a viscoelastic elastomer compound further containing a flame retardant. The cushion 18 is constituted of two portions that are the upper and lower portions 19 and 20. As shown in Fig. 3(a), the upper portion 19 of cushion 18 is formed into a honeycomb-shaped structure that is an aggregate of multiple cross sectional rectangular shapes with lateral side walls 21, longitudinal side walls 22, lateral partition walls 23, and longitudinal partition walls 24. Further, the lower portion 20 of cushion 18 is formed into a honeycomb-shaped structure that is an aggregate of multiple cross sectional rectangular shapes with lateral side walls 25, longitudinal side walls 26, lateral partition walls 27, and longitudinal partition walls 28, and a sheet-shaped material 29 such as nonwoven fabric, cloth, tape, and paper is bonded only to the periphery of the upper surface. As shown in Fig. 3(b), the upper and lower portions 19 and 20 of cushion 18 are each formed as a separate body, the upper portion 19 of cushion 18 is integrally bonded by an adhesive agent or heat welding to the lower portion 20 by sandwiching the sheet-shaped material 29 bonded only to the periphery of the upper surface of the lower portion 20. The cross-sectional size of the polygon constituting the honeycomb-shaped structure of the upper portion 19 of cushion 18 is made larger than the cross-sectional size of the polygon constituting the honeycomb-shaped structure of the lower part 20. The compressibility, flexibility, and buckling property of the upper portion 19 of cushion 18 are larger as compared with the compressibility, flexibility, and buckling property of the lower portion 20, the upper portion 19 is in a state that only the periphery is fixed to the lower portion 20, therefore, during the movement such as rolling over, the twisting crushing motion of a polygonal honeycomb-shaped structure having a larger cross-sectional size can be moved not only on the sides but also over a wide range of the honeycomb-shaped structure. Accordingly, the load dispersibility is further improved, the upper portion 19 of cushion 18 follows even to a small load, and disperses the load, and the lower portion 20 of cushion 18 has smaller compressibility, flexibility, and buckling property as compared with those in the upper portion, therefore, prevents the sinking due to a load.

In the structural example of the present invention, a rib with a + shape in plan view, of which the height is persistently lower than the heights of the lattice walls is formed integrally to the inner walls, therefore, limitation on the structure is further added. Further, in the structural example of the present invention, an object is to provide a cushion which solves the problem of lacking the durability, that is, easily generating so-called settling, and the like, and further follows even to a small load applied to the cushion, furthermore absorbs twist (shear force) at the time of rolling over, eliminates sinking by dispersing the load so that the user does not feel the bottom fitting, and improves sleeping comfort and seating comfort.

Under such an object, in the structural example of the present invention, a rib with a × or + shape in plan view, of which the height is lower than the heights of the lattice walls from the bottom, is formed integrally to the inner walls of lattice walls in a polygon of a honeycomb-shaped structure constituting the lattice body. That is, in the structural example of the present invention, a two-stage constitution of a lower layer portion in which a rib with a × or + shape is formed and an upper layer portion in which these ribs are not formed (hereinafter, such an installation method will be referred to as the first installation method). In this way, the compressibility in the vertical direction, the flexibility, and the buckling property can be drastically differentiated between the upper layer portion and the lower layer portion of a cushion.

In a case where a small load is applied to the cushion, the upper layer portion having no ribs can receive the small load, and only the upper layer portion can follow the load. On the other hand, in a case where a large load that cannot be received only by the upper layer portion is applied, the wall surfaces of the lattice walls of the upper layer portion tilt to the lower layer portion, and the wall surfaces are in a state of being in contact with the lower layer portion. At this time, the large load can be received by the rib structure of the lower layer portion, therefore, the sinking with which the user feels bottom fitting is prevented, and a cushion excellent in the load dispersibility can be obtained.

In the structural example of the present invention, the upper layer portion and the lower layer portion are clearly separated from each other in the vertical direction. Further, the rib constituting the lower layer portion is integrally formed to the surrounding lattice walls, and moreover, the rib is not formed in a projection shape, therefore, even if large twist (shear force) acts on a cushion, the cushion hardly tilts.

Further, in the structural example of the present invention, the shape of a rib is limited to be a × or + shape in plan view, and the crossing angle of the rib is limited to be approximately 90°. That is, by limiting the crossing angle of the rib so as to be approximately 90°, even if twist acts on a cushion from any direction, the cushion hardly tilts.

That is, in the structural example of the present invention, the compressibility, the flexibility, and the buckling property can be drastically differentiated from each other between the upper layer portion in which ribs are not formed and the lower layer portion in which ribs are formed. Accordingly, in a case where a load is applied, only the lattice walls constituting the upper layer portion can be mainly allowed to be tilted without substantially tilting the lower layer portion having the rib structure. In other words, the total tilting distance is borne only by the upper layer portion in which ribs are not formed, and the tilting distance borne by the lower layer portion can be reduced. Accordingly, the lateral shaking feeling given to the user can be drastically reduced.

In addition, in the cushion according to the present invention, the total tilting distance can be reduced. Accordingly, a cushion body in which by arranging the cushion according to the present invention on the seat of a wheelchair or the like, the stability of the seated position can be improved as compared with that of a simple lattice-shaped cushion body, and further the lateral shaking feeling is reduced while suppressing the tilting distance shorter for an elderly person and a physically handicapped person who are particularly difficult to maintain the seated posture can also be provided. In addition, by arranging the cushion having the above-described constitution on a wheelchair or the like, an epoch-making wheelchair that is capable of constantly maintaining and stabilizing the seated posture of an elderly person or the like can also be provided.

Further, in the structural example of the present invention, the second installation method in which the upper portion and the lower portion are arranged upside down can also be employed. In this second installation method, a rib structure with a × or + shape in plan view is set as an upper layer portion, and the lattice walls in a honeycomb pattern without having such ribs are used as the lower layer portion. In such a case, the contact area between the surface of the upper layer portion and the body surface of the user coming into contact with the surface of the upper layer portion can be increased, a soft touch feeling can be given to the user, and a stable gentle skin sensation can be continuously given to the user, as a result of which a more comfortable cushion body can be obtained. In a variation of the cushion in such a use form, for example, in a case where a small load is applied to the surface of the upper layer portion, the upper layer portion transmits the load to the lattice walls of the lower layer portion without substantially deforming the upper layer portion, and the lower layer portion is curved based on the transmitted load, as a result of which the load is dispersed. Further, also in a case where a large load is applied to the surface of the upper layer portion, the upper layer portion gradually sinks into the lower layer portion while maintaining the form, and after the upper layer portion reaches the bottom of the cushion, the load is dispersed while the upper layer portion itself collapses. In particular, in a case where the bottom of the cushion is fixed with nonwoven fabric or the like, the tilting distance of the cushion body itself becomes smaller as compared with the tilting distance of the cushion body in the first installation method, as a result of which the seated posture can be more stably retained.

As described above, in the structural example of the cushion according to the present invention, a space structure made of the lattice walls in a roughly divided honeycomb pattern, and a space structure surrounded by a finely divided rib structure are formed over two layers. The tendency of the tilting can be drastically differentiated between these two layers. Further, in this cushion, by replacing the upper layer portion and the lower layer portion with each other, the first installation method and the second installation method can be freely selectively used.

That is, the first installation method is desired in a case where a large force is applied locally as at the heel or the like, and the second installation method is desired in a case where the body and the cushion body come into contact with each other over a wide range as of the back or the like. In particular, in the second installation method, a particularly excellent effect is exerted when the bottom fitting itself is eliminated and the lateral shaking is reduced, in a case where the seated posture is required by lifting a backrest of a bed. Further, in this second installation method, a soft touch feeling can be given to the user, therefore, for a user who is sensitive to a skin touch feeling or a user who is concerned about the skin damage due to edema, a more comfortable use environment can also be provided.

In addition, in the first installation method and the second installation method, by including two space structures that have shapes different from each other, even in a case where a cushion is deformed by applying a large load particularly in the small divided space structure portion, the spaces surrounded by the walls of the honeycomb-shaped structure can be always continuously maintained, therefore, there are also characteristics that the heat retention of body temperature is excellent, and further the moisture such as sweat is easily released, and the cushion can be comfortable bedding.

The above-described content is the explanation of the installation method of cushion 1 in Fig. 1, and herein, with regard to cushion 7 in Fig. 2, both of the upper portion 8 and the lower portion 9 are in the combination according to the first installation method, but both of the upper portion 8 and the lower portion 9 can be in the combination according to the second installation method. In addition, in the combination, cushion 7 can also be constituted by setting the upper portion 8 with the first installation method, and setting the lower portion 9 with the second installation method, and further cushion 7 can also be constituted by setting the upper portion 8 with the second installation method, and setting the lower portion 9 with the first installation method. Further, in a case of constituting a cushion 7 in another combination, the lower portion 9 can be arranged at the top, and the upper portion 8 can also be arranged at the bottom, and in this case, as the combination, four combinations can be used as described above. Accordingly, eight combinations in total can be used as a combination method of constructing the cushion 7. This is the same in a case of constructing the cushion 18 in Fig. 3. These combinations are determined depending on the required strength of a cushioning property, and the circumstance, as a result of which the optimal constitution can be formed.

In addition, in the structural example of the present invention having a two-layer structure in which the upper layer portion and the lower layer portion are clearly separated in the vertical direction, a large difference in the deformation behavior between the upper layer portion and the lower layer portion can be generated, therefore, the shifting force generated in the cushion body can be effectively absorbed. Accordingly, by absorbing the shear force generated on the body surface by the shifting, the decrease in the blood flow rate of capillary vessels can be largely reduced, and the occurrence of a bedsore itself can be prevented.

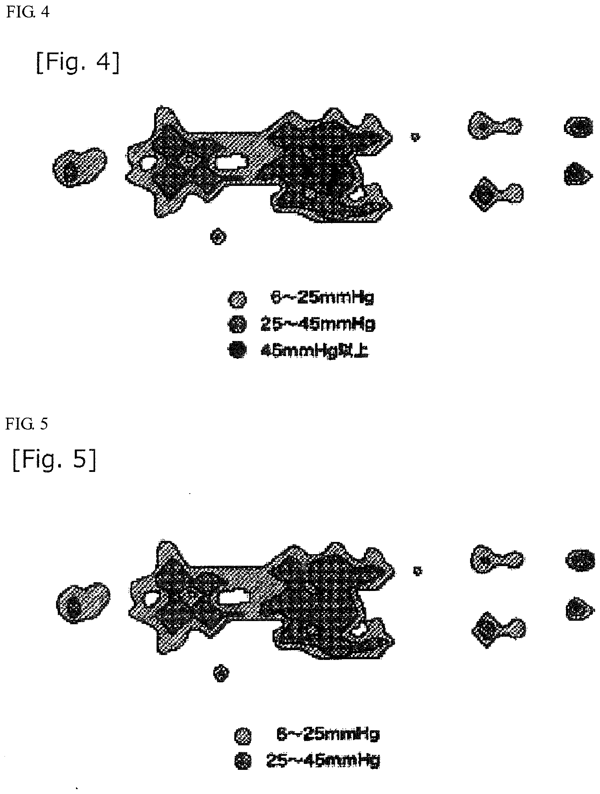

As the support, Fig. 4 is the data obtained by measuring the body pressure dispersion in a cushion body having a space structure made of one layer of lattice walls in a honeycomb pattern (hereinafter, referred to as a comparative structure example), and Fig. 5 is the data obtained by measuring the body pressure dispersion in a cushion body to which a structure of the present invention is applied. These data are obtained by arranging a cushion body to which the comparative structural example is applied and a cushion body to which the structure of the present invention is applied, respectively on a bed so that the back-raising angle is 80°, which is in the situation where the most local pressure can be generated at the time of practical use, and by measuring the pressure distribution loaded on each of the cushion bodies in a state where a human body is seated.

As a result, in Fig. 4, an area exceeding 40 mmHg is displayed slightly, and it is shown that an area where the pressure locally increases is generated. The lattice walls in a honeycomb pattern were largely tilted and sunk by a load, and the load was not able to be dispersed, as a result, the displayed result was generated.

On the other hand, in Fig. 5, an area exceeding 40 mmHg is not displayed at all, therefore, an area where the pressure locally increases is not generated, and it is shown that the sinking is suppressed by dispersing the load. In addition, the effect due to the difference of this body pressure dispersion during sleep becomes more prominent particularly in a state where a human body is in a lateral posture other than a supine posture.

From the supporting result as described above, the present invention employing a constitution that is a structure different from the structure of the comparative structural example has an action effect specific to the structural example of the present invention, which does not occur in the invention described in the comparative structural example, particularly in a case where it is necessary to provide more comfortable bedding and chairs with emphasis on the health aspect of a user.

In the structural example of the present invention, a lattice body of which the upper side is persistently opened may be formed. As described above, by opening the upper side, the dehumidifying performance can be improved as compared with a case where the inside of the column is sealed, and the shear force (twisting force) can be effectively absorbed.

In addition, in the structural example of the present invention in which the inner part of the lattice body is not sealed, it does not necessarily show a direct-type sinking motion, but shows various bending motions according to the gravity of an object. Therefore, in the structural example of the present invention structure, the sinking of the cushion elements cannot be effectively prevented merely by arranging solid protrusions focusing only on the direct-type sinking.

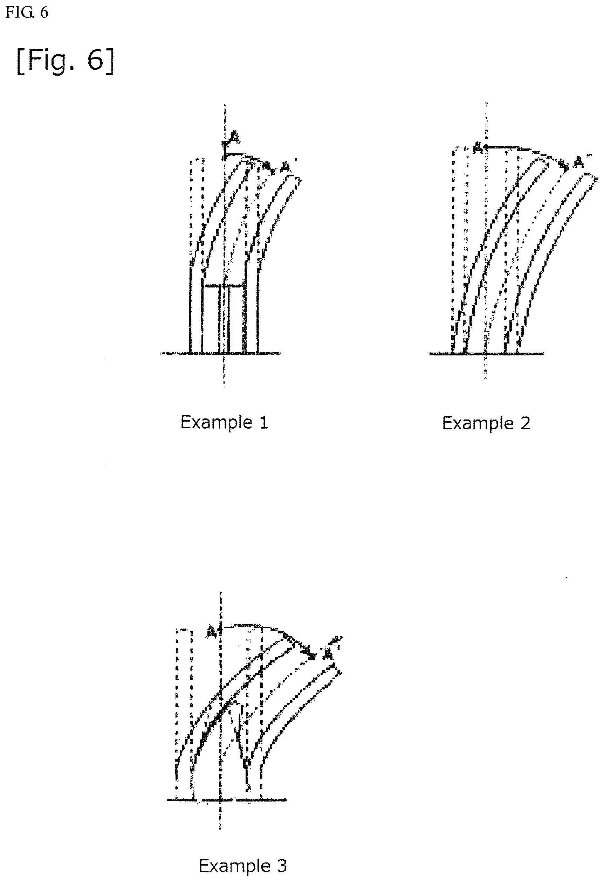

Accordingly, in the structural example of the present invention, both ends of a rib made of a viscoelastic elastomer compound with a + shape in plan view are integrally formed to the inner walls of the lattice walls. As a result, even if a large twist (shear force) acts on the lattice walls, by integrally forming the inner walls and both ends of the rib, the tilting distance can be reduced. As the support, in Fig. 6, it is shown that in Experimental Example 1 in which the inner walls of the lattice walls and both ends of a rib are integrally formed, as compared with Experimental Example 2 in which both ends of a rib are not integrally formed onto the inner walls of the lattice walls, the tilting distance (distance of A-A') becomes smaller. As a result, by preventing the sinking of the body in a case where the structural example of the present invention having a small tilting distance is applied as a cushion, the stability holding can be achieved.

On the other hand, in a case where the solid protrusions formed in a sealed lattice body are arranged as substitutes for the ribs of the structural example of the present invention, as shown in Experimental Example 3 of Fig. 6, the solid projections are largely tilted substantially in the similar way as in the tilting tendency of the vertical walls that are vertically erected, and the tilting distance itself becomes large, as a result, a so-called lateral shaking feeling is given to the user. In particular, in a case where twist (shear force) is applied at the time of turning over in bed, this column and the solid protrusions are largely tilted, therefore, a serious discomfort feeling is given to an elderly person and a physically handicapped person who use the product.

That is, in the structural example of the present invention, the tilting tendency and the tilting distance in a case where a load is applied to the lattice body of which the upper side is persistently opened are sufficiently inspected, and then a constitution for realizing the optimal tilting of the lattice body for contributing to the stable holding of a body is newly found, and is used for the constituent features of the invention.

In the structural example of the cushion according to the present invention as described above, the total tilting distance can be reduced as compared with that in the conventional examples. Accordingly, a cushion body in which by arranging the structural example of the cushion according to the present invention on the seat of a wheelchair or the like, the stability of the seated position can be improved as compared with that of a simple lattice-shaped cushion body, and while further suppressing the tilting distance for an elderly person and a physically handicapped person who are particularly difficult to maintain the seated posture, the lateral shaking feeling is also reduced can also be provided. In particular, in the cushion body arranged to a wheelchair or the like, since the case where an elderly person or the like is continuously seated over a long period of time is increased, the moisture tends to be high, but in the structural example of the present invention, in which the upper side of the lattice body is opened, the cushion body can have the dehumidifying performance.

### <<Production method of flame-retardant three-dimensional lattice-shaped cushion>>

The method for producing a flame-retardant three-dimensional lattice-shaped cushion of the present invention will be described in detail below.

The method for producing the structure of the present invention is not particularly limited. It can be changed according to the melting point, mixing ratio, or the like of a styrene-based thermoplastic elastomer or a mineral oil. As the specific method for producing the structure of the present invention, for example, the following processes are included. The production method includes:
(1) a kneading process in which a styrene-based thermoplastic elastomer and a plasticizer are kneaded to obtain a molding material,
(2) a molding process in which the molding material obtained in the process (1) is pressed into a cavity of a metal mold at a predetermined temperature, and
(3) a releasing process in which after the process (2), the metal mold is opened after the shape of a molded article in the cavity is stabilized, and the molded article is taken out from the metal mold.

The process of "kneading" the material has already been described above, and is not particularly limited as long as being a method in which various kinds of components are favorably mixed. Further, the various kinds of components can also be dissolved and mixed in an organic solvent capable of dissolving the various kinds of components.

As the method used in the molding process in which the viscoelastic elastomer compound of the present invention is used, for example, injection molding, extrusion molding, or the like can be applied. For the method, a molding machine capable of melting general molding materials can be used. Examples of the molding machine include an injection molding machine, and an extrusion molding machine. The molding condition is, in general, preferably 100 to 300°C, and more preferably 120 to 280°C. In this case, the temperature of the metal mold to be used is set preferably at 50 to 210°C.

### «Physical properties of flame-retardant three-dimensional lattice-shaped cushion»

Physical property values as a structure of a flame-retardant three-dimensional lattice-shaped cushion are evaluated in the following two items. By containing a flame-retardant substance as in the present invention, the hardness generally is increased. Further, even depending on the kind and amount of the flame-retardant substance, the physical properties to be obtained are largely different. For example, in a case where aluminium hydroxide or magnesium hydroxide is used as a flame retardant, even if the flame retardancy is sufficient, there is no elasticity, and a case where the function as a cushion is not sufficiently fulfilled also in the structural example of the present invention is generated. In addition, in general, at a predetermined mixture ratio of the oil and the thermoplastic elastomer of the present invention, there is a case where problems in the formability and the shape retention in a complex structure are generated because of the extreme flexibility. However, by setting the flame retardant component within the range of the present invention, the formability and the shape retention can be imparted due to a two-layer structure via the rib structure of the present invention, and at the same time the mechanical properties as a cushion based on the followability due to the flexibility are satisfied. Accordingly, also in the correlation with the structure, the contents of the oil and the styrene-based thermoplastic elastomer are also required to be adjusted at the same time. That is, in order to achieve at the same time the flame retardancy required in the flame-retardant three-dimensional lattice-shaped cushion and the above-described mechanical properties, it is essential to strictly adjust the mixing ratio of the main components (an oil, a styrene-based thermoplastic elastomer, a brominated flame retardant, and antimony trioxide) while measuring the results of the following physical property values.

### <Compression set test>

As to the elasticity (reproducibility of shape) required as the structure of a cushion in the viscoelastic elastomer compound according to the present invention, the evaluation is performed by determining the compression set (Cₛ) in accordance with the JIS K 6400-4: C method. The compression set of the flame-retardant three-dimensional lattice-shaped cushion of the present invention is preferably 10.0% or less, more preferably 5.0% or less, and most preferably 3.0% or less. This is because when the compression set is 10.0% or less, the required excellent durability and reproducibility of a cushioning function are satisfied as a cushion having the structure according to the present invention.

### <Repeated compression set test>

As to the durability required as the structure of a cushion in the viscoelastic elastomer compound according to the present invention, the evaluation is performed by determining the thickness reduction rate (C_{fd}) in accordance with the JIS K 6400-4: B method. The thickness reduction rate of the flame-retardant three-dimensional lattice-shaped cushion of the present invention is 5.0% or less, preferably 2.0% or less, more preferably 1.0% or less, and most preferably 0.5% or less. This is because when the thickness reduction rate is 5.0% or less, the settling due to the use is prevented and the required excellent durability is satisfied as a cushion having the structure according to the present invention.

### <Evaluation of followability to shifting and twisting>

As the structure of the flame-retardant three-dimensional lattice-shaped cushion according to the present invention, it is preferred to have high followability to the shifting and twisting. The followability can be evaluated by measuring the changes in blood flow and the state of body pressure dispersion described above in the contact area of a human body and a cushion when the cushion is applied to the human body. It is considered that according to the followability of the flame-retardant three-dimensional lattice-shaped cushion according to the present invention, the pressure in the contact area can be dispersed, and the blood flow disturbance (vascular occlusion) can be suppressed. In particular, in the application to a vehicle (particularly, an automobile and a train) in which an intermittent heavy load is applied, it is assumed that the same state is required to be maintained for a long time, therefore, the high followability is particularly required.

More specifically, for example, in a case where the application to a vehicle is evaluated, the evaluation can be performed by reproducing the vibration (or load) that may occur in a seat for a vehicle, and by measuring the blood flow in a contact area between the subject who is immobilized on a seat and the seat with the use of a Laser Doppler blood flow meter, and by measuring the state of body pressure dispersion with the use of a body pressure measuring instrument.

### «Action and effect of flame-retardant three-dimensional lattice-shaped cushion»

In a conventional cushion, to which the flame retardancy is tried to impart, it is extremely difficult as a cushion to maintain the followability and absorbability of shifting and twisting as described above, and the effect of preventing deformation, settling and the like of the longitudinal and lateral partition walls. This is because the kind and mixing amount of the materials are required to satisfy that not only the physical properties are obtained such that the flame retardancy test, the strain test, and the like are satisfied as the viscoelastic elastomer compound materials, but also the materials function as the structure. According to the flame-retardant three-dimensional lattice-shaped cushion according to the present invention, the mechanical properties as a cushion, which is same as the conventional products, can be obtained while the sufficient flame retardancy is provided.

### <<Use method of flame-retardant three-dimensional lattice-shaped cushion>>

The flame-retardant three-dimensional lattice-shaped cushion according to the present embodiment can be used as follows. For example, the flame-retardant three-dimensional lattice-shaped cushion can be applied to a vibration (with bolts) insulator, bolt penetration bush, a (concavo-convex) vibration isolating sheet, a vibration isolating member with a shape of tape, seal, or chip, a buffer material for a bag (for example, a shoulder part of a school bag, a handle part, and the like), an arm rest or a wrist rest for PC (also applied to a mouse pad), a paper feeding roller, an audio-related member (a turntable, an insulator, a spacer, and the like), vibration isolating rubber feet for a case, a face of a doll for shoe esthetics (skin, and the like), a tennis racket, a heat insulating sheet, a waterproof sheet for protecting a utility pole, a bedsore prevention mat and the like, a film sealing product (for example, an elderly femoral region fracture prevention hip protector, a postoperative body shape auxiliary material), a suit for rider, gloves (for a soccer keeper, golf, skiing, and a rider), a rifle jacket (for example, shoulder pad), sports shoes, a bed, a high temperature and high pressure molding machine cushion (ceramic molding, and the like), a thermally conductive gel sheet (for example, for outer periphery for heat dissipation of a CPU core, and the like), a damping pad for a game machine, a health care related, an automobile member (a buffer material and the like for window packing), a shock absorbing material for automobile doors (side, and the like), a sheet in an automobile, insoles for shoes, a shock absorbing material for foot care for alleviating the pain caused by hallux valgus, rolling nail, or the like, which hurts when hitting a shoe, a shock absorbing material for a bumper or a helmet, a bed, a mattress, a pillow, a cushion, miscellaneous goods such as a floor pillow, a shock absorbing material as bedding, an elbow pad, a knee pad, saddle sore prevention on horseback by a saddle, ski boots, toe shoes, ballet shoes, a sports-related shock absorbing material for a glove, a shock absorbing material used when loads are carried, a shock absorbing material for medical use for protecting from fractures, injuries and scratches, and preventing the skin from rubbing with an artificial leg, a breast pad for a person who cut the breast due to breast cancer or the like, a bathing costume, or breast augmentation, artificial bait for fishing and the like, further, cleaning goods for adsorbing dust and dirt of daily commodities such as a desk, a chair, a personal computer, a bookshelf, and a floor, in addition, a cosmetic such as a pack, and a poultice, which utilize sustained-release property of an oil agent, an aromatic substance, or the like. Among them, because of the flame retardancy and the twist (shear force) absorption property, the applications to a bedsore prevention mat, a bed, and an automobile seat are preferred.

### Examples

Hereinafter, Examples of the present invention will be described, however, the present invention is not limited to the following Examples.

### (Materials)

In preparing the viscoelastic elastomer compound according to Examples, the following materials were used.
Oil: MORESCO WHITE P-100 (trade name, manufactured by MORESCO Corporation, paraffin-based oil)
Styrene-based thermoplastic elastomer: Toughtec N504 (trade name, manufactured by Asahi Kasei Chemicals Corporation, having a weight average molecular weight of around 300,000, and a styrene content of 30% by weight)
Brominated flame retardant: FR-B (trade name, manufactured by NIPPOH CHEMICALS CO., LTD., hexabromobenzene, having a melting point of 315°C) Antimony trioxide: AT-3^{CN} (trade name, manufactured by SUZUHIRO CHEMICAL CO., LTD.)
Other components: a hindered phenol-based antioxidant, and a phosphorus-based processing heat stabilizer)

### (Example 1)

According to the formulation in Table 1, test piece 1 was produced in accordance with the production method described above for Example 1. In more detail, the components were thoroughly pre-kneaded, the pre-kneaded mixture was extruded at 140°C as a strand having a diameter of around 5 mm by a twin-screw extruder or the like, and the strand was cut into pieces having an appropriate length. Pellets of the obtained compound were melted at 170°C, the melted material was poured into a metal mold (in accordance with FMVSS No. 302), and cooled to obtain the test piece 1. Incidentally, the numerical values described in Table 1 indicate the parts by weight of each component in a case where the total of the oil and the styrene-based thermoplastic elastomer was set as 100 parts by weight.

### [Table 1]

**[Table 1]**

| | Example 1 | Comparative Example 1 |
|---|---|---|
| Oil | 80.0 | 80.0 |
| Styrene-based thermoplastic elastomer | 20.0 | 20.0 |
| Brominated flame retardant | 30.0 | 0.0 |
| Antimony trioxide | 10.0 | 0.0 |
| Others | 0.8 | 0.8 |

### (Comparative Example 1)

The production was performed in the same manner as in Example 1 except that the formulation was changed to the formulation of Comparative Example 1 in Table 1 to obtain a test piece 2.

### <Flammability test>

In accordance with the above-described test method, flammability tests were performed on test pieces 1 and 2.

### (Evaluation of flammability)

The results of the flammability tests were evaluated as follows. A case of exceeding 150 mm/min was marked with ×, and a case of 150 mm/min or less was marked with ○. The results are shown in Table 2.

### [Table 2]

**[Table 2]**

| | Flammability test | Tensile strength test | Elongation at break test | Tear strength test |
|---|---|---|---|---|
| Test piece 1 | ○ | ○ | ○ | ○ |
| Test piece 2 | × | ○ | ○ | ○ |
| Shape | conform to FMVSS No.302 | No. 2 Dumbbell shape | No. 2 Dumbbell shape | Angle type without notch |

### <Tensile strength test>

According to the above-described test method, under the similar conditions as those of the flammability test, test pieces 1 and 2 (test piece shape: No. 3 dumbbell shape) were prepared, and each of the test pieces was subjected to a tensile strength test.

### (Evaluation of tensile strength)

The results of the tensile strength tests were evaluated as follows. A case of 0.8 MPa or more was marked with ○, and a case of lower than 0.8 MPa was marked with ×. The results are shown in Table 2.

### <Elongation at break test>

According to the above-described test method, under the similar conditions as those of the flammability test, test pieces 1 and 2 (test piece shape: crescent shape) were prepared, and each of the test pieces was subjected to an elongation at break test.

### (Evaluation of elongation at break)

The results of the elongation at break tests were evaluated as follows. A case of an elongation at break of 850% or more was marked with ○, and a case of lower than 850% was marked with ×. The results are shown in Table 2.

### <Tear strength test>

According to the above-described test method, tear strength tests were performed on test pieces 1 and 2.

### (Evaluation of tear strength test)

The results of the tear strength tests were evaluated as follows. A case of 8.0 kN/m or more was marked with ○, and a case of lower than 8.0 kN/m was marked with ×. The results are shown in Table 2.

According to the formulation in Table 1, in accordance with the production method described above, with each of the viscoelastic elastomer compounds of Example 1 and Comparative Example 1, a structure of a three-dimensional lattice-shaped cushion of Structural Example 1 was prepared. In detail, the components were thoroughly pre-kneaded, the pre-kneaded mixture was extruded at 140°C as a strand having a diameter of around 5 mm by a twin-screw extruder or the like, and the strand was cut into pieces having an appropriate length. The material was charged into a molding machine from the material supply port of the molding machine, and plasticized at 170°C, and the molten material was poured into a mold having a cavity of an intended shape. The temperature of the metal mold was set to around 60°C. After the lapse of an appropriate cooling time, the molding was pushed out from the metal mold and received as the structure.

### <Compression set test>

In accordance with the above-described test method, for the above-obtained structures according to Example 1 and Comparative Example 1, a compression set test was performed (test piece shape: 5 × 5 × 3 cm, at 35±1°C, and 70±5% RH × 72 hours, at a compression ratio of 50%).

### (Evaluation of compression set test)

The results of the repeated compression set tests were evaluated as follows. A case of exceeding a compression set of 10.0% was marked with ×, and a case of 10.0% or less was marked with ○. The results are shown in Table 3.

### [Table 3]

**[Table 3]**

| | Compression residual strain | Repeated compression residual strain |
|---|---|---|
| Example 1 | ○ | ○ |
| Comparative Example 1 | ○ | ○ |

### <Repeated compression set test>

In accordance with the above-described test method, for the structures according to Example 1 and Comparative Example 1, a repeated compression set test was performed (test piece shape: 5 × 5 × 3 cm, 80000 times, at a compression ratio of 50%).

### (Evaluation of repeated compression set test)

The results of the repeated compression set tests were evaluated as follows. A case of exceeding a thickness reduction rate of 5.0% was marked with ×, and a case of 5.0% or less was marked with ○. The results are shown in Table 3.

### <Followability test to shifting and twisting>

A test on the followability in a case of applying the flame-retardant three-dimensional lattice-shaped cushion of the present invention to a seat for a passenger car was performed. In addition to the above-described flame-retardant three-dimensional lattice-shaped cushion according to Example 1 and the three-dimensional lattice-shaped cushion according to Comparative Example 1, further, the measurement was performed by the following method for the following Reference Example.

### (Reference Example)

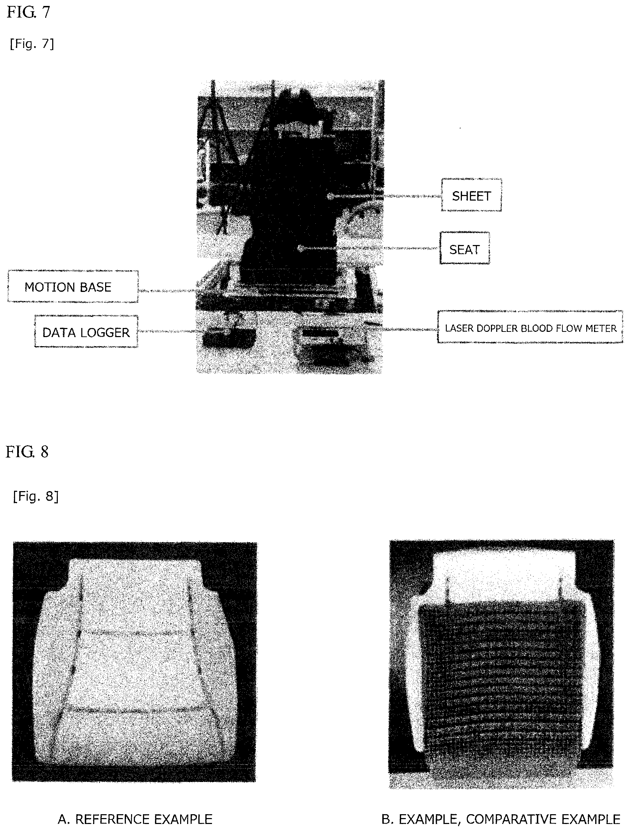

As shown in Fig. 8(A), a seat made of urethane, which is used for a passenger car available on the market, was used as a reference example as it is.

### (Apparatus in use)

Motion base (model number: MB-150, manufactured by COSMATE CO., LTD.)
Laser Doppler blood flow meter (product name: OMEGAFLO FLO-C1, manufactured by OMEGAWAVE, INC.)
Contact type probe (product name: BOM probe, manufactured by Asahibio)
Body pressure measuring instrument (product name: ERGOCHECK, manufactured by ABW)

### (Test method)

As shown in Fig. 7, the subject was seated on a passenger car seat arranged on a motion base, and the feet were placed on a table and adjusted such that the knees were at right angles. With that posture, the blood flow rate when the seat was tilted forward at 12 degrees was measured with a Laser Doppler blood flow meter (the value of the tissue blood flow rate was output as voltage (V)). The blood flow measurement position was set to be in the vicinity of the left and right hip ischial tuberosities where the body pressure is easily applied in the seated posture, and the position was specified by a body pressure measuring instrument (ERGOCHECK). For the measurement seat, a seat made of urethane, which is used for a vehicle available on the market, was used, and as shown in Fig. 8(B), each of the cushion structures according to Example 1 and Comparative Example 1 was arranged on the seat. In addition, the test was performed by employing two males in their 20s, who have a BMI of 20 and 18, respectively, as the subjects.

With each of the subjects, the measurement was performed six times for the blood flow rate (V) for 180 seconds in total in three modes of seated for 60 seconds, tilted for 60 seconds, and tilt released for 60 seconds. In the similar manner, the pressure value was measured twice under the following load conditions. The mode (process) of implementation will be specifically described below.
(1) Seated (0 to 60 seconds): seated on a seat that is parallel to the floor (mode 1)
(2) Tilted (60 to 120 seconds): the seat is tilted forward at 12 degrees (mode 2)
(3) Tilt released (120 to 180 seconds): the floor and the seat are returned so as to be parallel to each other (mode 3)

### (Evaluation of followability test to shifting and twisting)

### • Blood flow test

The reactive hyperemia (V·s) in the above-described mode 3 was measured. Herein, as to the reactive hyperemia, the average blood flow rate in mode 1 (at the time of seating: 0 to 60 seconds) was used as the criterion of the blood flow rate, in mode 3 (at the time of tilt releasing: 120 to 180 seconds), the value obtained by integrating the part of the blood flow value showing a value larger than the criterion of the blood flow rate with the time was calculated as the reactive hyperemia (V·s).

The reactive hyperemia of the cushion according to Example 1 was around 0.3 times the value of Reference Example in terms of the average value (average of all of the measurement values for the two subjects), and showed the value equivalent to the reactive hyperemia of the cushion according to Comparative Example 1. That is, it is considered that the cushion according to the present invention has excellent followability, therefore, at the time of tilting, the blood flow was hardly inhibited, and the blood flow rate after the tilt release (after load release) was further reduced.

### • Body pressure dispersion test

Measurement of the body pressure dispersion test in the above-described mode 2 was performed. The maximum value of the pressure of the cushion according to Example 1 was around 0.8 times the value of Reference Example in terms of the average value (average of all of the measurement values for the two subjects), and showed the value equivalent to the maximum value of the pressure of the cushion according to Comparative Example 1. It is considered that the cushion according to the present invention has excellent followability, therefore, the contact area of the seat and the subject was increased, and the maximum value of the pressure was further reduced.

### Reference Signs List

- 1: Cushion
- 2: Lateral side wall
- 3: Longitudinal side wall
- 4: Lateral partition wall
- 5: Longitudinal partition wall
- 6: Rib
- 7: Cushion
- 8: Upper portion
- 9: Lower portion
- 10: Lateral side wall
- 11: Longitudinal side wall
- 12: Lateral partition wall
- 13: Longitudinal side wall
- 14: Lateral side wall
- 15: Longitudinal side wall
- 16: Lateral partition wall
- 17: Longitudinal partition wall
- 18: Cushion
- 19: Upper portion
- 20: Lower portion
- 21: Lateral side wall
- 22: Longitudinal side wall
- 23: Lateral partition wall
- 24: Longitudinal partition wall
- 25: Lateral side wall
- 26: Longitudinal side wall
- 27: Lateral partition wall
- 28: Longitudinal partition wall
- 29: Sheet-shaped material

## Claims

1. A flame-retardant three-dimensional lattice-shaped cushion, comprising
a viscoelastic elastomer compound, wherein
the flame-retardant three-dimensional lattice-shaped cushion has a thickness reduction rate of 5.0% or less in a repeated compression set test in accordance with JIS K-6400-4: 2004 B, has a honeycomb-shaped structure being an aggregate of a plurality of polygons formed by continuous lattice walls, and forms a lattice body of which at least the upper side is opened,
the viscoelastic elastomer compound comprises an oil, a styrene-based thermoplastic elastomer, a brominated flame retardant, and antimony trioxide, and
wherein the oil component is contained in the viscoelastic elastomer compound in an amount of 30 to 80% by weight, based on the total composition,
or wherein
the flame-retardant three-dimensional lattice-shaped cushion has a honeycomb-shaped structure being an aggregate of a plurality of polygons formed by continuous lattice walls, and forms a lattice body of which at least the upper side is opened,
compressibility, flexibility, and a buckling property of the lattice body are set differently between a upper layer portion and a lower layer portion of the lattice body,
the lower layer portion is formed by forming both ends of a rib with a + shape in plan view, of which the height is lower than a height of lattice walls from the bottom integrally to the inner walls of the lattice walls in a polygon of a honeycomb-shaped structure constituting the lattice body,
the viscoelastic elastomer compound comprises an oil, a styrene-based thermoplastic elastomer, a brominated flame retardant, and antimony trioxide, and
wherein the oil component is contained in the viscoelastic elastomer compound in an amount of 30 to 80% by weight, based on the total composition,
or wherein
the flame-retardant three-dimensional lattice-shaped cushion has a honeycomb-shaped structure being an aggregate of a plurality of polygons formed by continuous lattice walls, and forms a lattice body of which at least the upper side is opened,
compressibility, flexibility, and a buckling property of the lattice body are set differently between a upper layer portion and a lower layer portion of the lattice body,
the upper layer portion is formed by forming both ends of a rib with a + shape in plan view, of which the height is lower than a height of lattice walls from the upper surface integrally to the inner walls of the lattice walls in a polygon of a honeycomb-shaped structure constituting the lattice body,
the viscoelastic elastomer compound comprises an oil, a styrene-based thermoplastic elastomer, a brominated flame retardant, and antimony trioxide, and
wherein the oil component is contained in the viscoelastic elastomer compound in an amount of 30 to 80% by weight, based on the total composition.

2. The flame-retardant three-dimensional lattice-shaped cushion according to claim 1, wherein
the viscoelastic elastomer compound comprises the brominated flame retardant in a weight ratio of 0.10 to 0.40, and the antimony trioxide in a weight ratio of 0.03 to 0.15, based on the total weight of the oil and the styrene-based thermoplastic elastomer.

3. The flame-retardant three-dimensional lattice-shaped cushion according to claim 1 or 2, wherein
the viscoelastic elastomer compound comprises the styrene-based thermoplastic elastomer in a weight ratio of 0.10 to 0.50 based on the weight of the oil.

4. The flame-retardant three-dimensional lattice-shaped cushion according to any one of claims 1 to 3, wherein
the styrene-based thermoplastic elastomer has a weight average molecular weight of 100,000 to 500,000, preferably 150,000 to 400,000 and more preferably 200,000 to 350,000 in terms of polystyrene measured by gel permeation chromatography.

5. The flame-retardant three-dimensional lattice-shaped cushion according to any one of claims 1 to 4, wherein
the styrene-based thermoplastic elastomer has a content of styrene of 15 to 50% by weight.

6. The flame-retardant three-dimensional lattice-shaped cushion according to any one of claims 1 to 5, wherein
the brominated flame retardant has a melting point higher than a melting point of the styrene-based thermoplastic elastomer.

7. The flame-retardant three-dimensional lattice-shaped cushion according to any one of claims 1 to 6, wherein
the brominated flame retardant is a component containing an aromatic ring having a plurality of bromine atoms in the molecular structure.

8. The flame-retardant three-dimensional lattice-shaped cushion according to any one of claims 1 to 7, wherein
the oil is a paraffin-based oil.

9. The flame-retardant three-dimensional lattice-shaped cushion according to any one of claims 1 to 8, wherein
the viscoelastic elastomer compound comprises the styrene-based thermoplastic elastomer in a weight ratio of 5 to 30%, and preferably 10 to 20%.

10. The flame-retardant three-dimensional lattice-shaped cushion according to any one of claims 1 to 9, wherein
the viscoelastic elastomer compound comprises the oil in a weight ratio of 40 to 70% based on the total composition.

11. The flame-retardant three-dimensional lattice-shaped cushion according to any one of claims 1 to 10, wherein
the viscoelastic elastomer compound comprises the brominated flame retardant in a weight ratio of 0.20 to 0.30, and the antimony trioxide in a weight ratio of 0.06 to 0.10, based on the total weight of the oil and the styrene-based thermoplastic elastomer.

12. The flame-retardant three-dimensional lattice-shaped cushion according to any one of claims 1 to 11, for use in an automobile interior.

## Patentansprüche

1. Flammwidriges, dreidimensionales gitterförmiges Kissen, enthaltend
eine viskoelastische Elastomerverbindung, worin
das flammwidrige dreidimensionale gitterförmige Kissen eine Dickenreduktionsrate von 5,0 % oder weniger in einem wiederholten Druckverformungstest entsprechend JIS K-6400-4:2004 B, eine wabenförmige Struktur hat, die ein Aggregat einer Vielzahl von Polygonen ist, gebildet durch kontinuierliche Gitterwände, und einen Gitterkörper bildet, wobei zumindest die untere Seite davon geöffnet ist,
die viskoelastische Elastomerverbindung ein Öl, ein thermoplastisches Elastomer auf Styrolbasis, ein bromiertes flammwidriges Mittel und Antimontrioxid enthält und
worin die Ölkomponente in der viskoelastischen Elastomerverbindung in einer Menge von 30 bis 80 Gew.-%, bezogen auf die Gesamtzusammensetzung, enthalten ist, oder worin
das flammwidrige dreidimensionale gitterförmige Kissen eine wabenförmige Struktur aufweist, die ein Aggregat einer Vielzahl von Polygonen ist, gebildet durch kontinuierliche Gitterwände, und einen Gitterkörper bildet, wobei zumindest die obere Seite davon geöffnet ist,
wobei das Kompressionsvermögen, die Flexibilität und eine Knickeigenschaft des Gitterkörpers unterschiedlich zwischen einem oberen Schichtbereich und einem unteren Schichtbereich des Gitterkörpers eingestellt sind,
worin der untere Schichtbereich gebildet ist durch Formen von beiden Enden einer Rippe mit einer +-Form in planarer Ansicht, wobei die Höhe davon niedriger ist als eine Höhe der Gitterwände von dem Boden integral zu den inneren Wänden der Gitterwände in einem Polygon einer wabenförmigen Struktur, die den Gitterkörper ausmacht,
die viskoelastische Elastomerverbindung ein Öl, ein thermoplastisches Elastomer auf Styrolbasis, ein bromiertes flammwidriges Mittel und Antimontrioxid enthält und
worin die Ölkomponente in der viskoelastischen Elastomerverbindung in einer Menge von 30 bis 80 Gew.-% enthalten ist, bezogen auf die Gesamtzusammensetzung,
oder worin
das flammwidrige dreidimensionale gitterförmige Kissen eine wabenförmige Struktur hat, die ein Aggregat aus einer Vielzahl von Polygonen ist, gebildet durch kontinuierliche Gitterwände, und einen Gitterkörper bildet, wobei zumindest die obere Seite davon geöffnet ist,
das Kompressionsvermögen, die Flexibilität und Knickeigenschaft des Gitterkörpers unterschiedlich zwischen einem oberen Schichtbereich und einem unteren Schichtbereich des Gitterkörpers eingestellt sind,
der obere Schichtbereich gebildet ist durch Bilden von beiden Enden einer Rippe mit einer +-Form in der planaren Ansicht, wobei die Höhe davon niedriger ist als eine Höhe der Gitterwände von der oberen Oberfläche, integral zu den inneren Wänden der Gitterwände in einem Polygon einer wabenförmigen Struktur, die den Gitterkörper konstituiert,
die viskoelastische Elastomerverbindung ein Öl, ein thermoplastisches Elastomer auf Styrolbasis, ein bromiertes flammwidriges Mittel und Antimontrioxid enthält und
worin die Ölkomponente in der viskoelastischen Elastomerkomponente in einer Menge von 30 bis 80 Gew.-% enthalten ist, bezogen auf die Gesamtzusammensetzung.

2. Flammwidriges, dreidimensionales gitterförmiges Kissen gemäß Anspruch 1, worin die viskoelastische Elastomerverbindung das bromierte flammwidrige Mittel in einem Gewichtsverhältnis von 0,10 bis 0,40 und das Antimontrioxid in einem Gewichtsverhältnis von 0,03 bis 0,15 enthält, bezogen auf das Gesamtgewicht des Öls und des thermoplastischen Elastomers auf Styrolbasis.

3. Flammwidriges, dreidimensionales gitterförmiges Kissen gemäß Anspruch 1 oder 2, worin die viskoelastische Elastomerverbindung das thermoplastische Elastomer auf Styrolbasis in einem Gewichtsverhältnis von 0,10 bis 0,50 enthält, bezogen auf das Gewicht des Öls.

4. Flammwidriges, dreidimensionales gitterförmiges Kissen gemäß einem der Ansprüche 1 bis 3, worin das thermoplastische Elastomer auf Styrolbasis ein Molekulargewicht im Gewichtsmittel von 100.000 bis 500.000, bevorzugt 150.000 bis 400.000 und mehr bevorzugt 200.000 bis 350.000 hat, ausgedrückt als Polystyrol, gemessen durch Gelpermeationschromatographie.

5. Flammwidriges, dreidimensionales gitterförmiges Kissen gemäß einem der Ansprüche 1 bis 4, worin das thermoplastische Elastomer auf Styrolbasis einen Styrolgehalt von 15 bis 50 Gew.-% hat.

6. Flammwidriges, dreidimensionales gitterförmiges Kissen gemäß einem der Ansprüche 1 bis 5, worin das bromierte flammwidrige Mittel einen Schmelzpunkt hat, der höher ist als der Schmelzpunkt des thermoplastischen Elastomers auf Styrolbasis.

7. Flammwidriges, dreidimensionales gitterförmiges Kissen gemäß einem der Ansprüche 1 bis 6, worin das bromierte flammwidrige Mittel eine Komponente ist, die einen aromatischen Ring mit einer Vielzahl von Bromatomen in der Molekülstruktur enthält.

8. Flammwidriges, dreidimensionales gitterförmiges Kissen gemäß einem der Ansprüche 1 bis 7, worin das Öl ein Öl auf Paraffinbasis ist.

9. Flammwidriges, dreidimensionales gitterförmiges Kissen gemäß einem der Ansprüche 1 bis 8, worin die viskoelastische Elastomerverbindung das thermoplastische Elastomer auf Styrolbasis in einem Gewichtsverhältnis von 5 bis 30 % und bevorzugt von 10 bis 20 % enthält.

10. Flammwidriges, dreidimensionales gitterförmiges Kissen gemäß einem der Ansprüche 1 bis 9, worin die viskoelastische Elastomerverbindung das Öl in einem Gewichtsverhältnis von 40 bis 70 % enthält, bezogen auf die Gesamtzusammensetzung.

11. Flammwidriges, dreidimensionales gitterförmiges Kissen gemäß einem der Ansprüche 1 bis 10, worin die viskoelastische Elastomerverbindung das bromierte flammwidrige Mittel in einem Gewichtsverhältnis von 0,20 bis 0,30 und das Antimontrioxid in einem Gewichtsverhältnis von 0,06 bis 0,10 enthält, bezogen auf das Gesamtgewicht des Öls und des thermoplastischen Elastomers auf Styrolbasis.

12. Flammwidriges, dreidimensionales gitterförmiges Kissen gemäß einem der Ansprüche 1 bis 11, zur Verwendung in einem Automobilinneren.

## Revendications

1. Coussin en forme de treillis tridimensionnel ignifuge, comprenant un composé élastomère viscoélastique, dans lequel
le coussin en forme de treillis tridimensionnel ignifuge présente un taux de réduction d'épaisseur inférieur ou égal à 5,0 % dans un test de déformation rémanente à la compression répétée conformément à la norme JIS K-6400-4 :2004 B,
présente une structure en forme de nid d'abeille étant un agrégat d'une pluralité de polygones formés par des parois en treillis continues, et forme un corps en treillis dont au moins la partie supérieure est ouverte,
le composé élastomère viscoélastique comprend une huile, un élastomère thermoplastique à base de styrène, un ignifugeant bromé, et du trioxyde d'antimoine, et
dans lequel le composant huileux est contenu dans le composé élastomère viscoélastique en une quantité allant de 30 à 80 % en poids, sur la base de la composition totale,
ou dans lequel
le coussin en forme de treillis tridimensionnel ignifuge présente une structure en forme de nid d'abeille étant un agrégat d'une pluralité de polygones formés par des parois en treillis continues, et forme un corps en treillis dont au moins la partie supérieure est ouverte,
la capacité de compression, la souplesse et une propriété de déformation du corps en treillis sont définies différemment entre une partie de couche supérieure et une partie de couche inférieure du corps en treillis,
la partie de couche inférieure est formée par formation de deux extrémités d'une arête avec une forme en + dans une vue en plan, dont la hauteur est inférieure à une hauteur des parois en treillis de la base intégralement vers les parois internes des parois en treillis dans un polygone d'une structure en forme de nid d'abeille constituant le corps en treillis,
le composé élastomère viscoélastique comprend une huile, un élastomère thermoplastique à base de styrène, un ignifugeant bromé, et du trioxyde d'antimoine, et
dans lequel le composant huileux est contenu dans le composé élastomère viscoélastique en une quantité allant de 30 à 80 % en poids, sur la base de la composition totale,
ou dans lequel
le coussin en forme de treillis tridimensionnel ignifuge présente une structure en forme de nid d'abeille étant un agrégat d'une pluralité de polygones formés par des parois en treillis continues, et forme un corps en treillis dont au moins la partie supérieure est ouverte,
la capacité de compression, la souplesse et une propriété de déformation du corps en treillis sont définies différemment entre une partie de couche supérieure et une partie de couche inférieure du corps en treillis,
la partie de couche supérieure est formée par formation de deux extrémités d'une arête avec une forme en + dans une vue en plan, dont la hauteur est inférieure à une hauteur des parois en treillis de la surface supérieure intégralement vers les parois internes des parois en treillis dans un polygone d'une structure en forme de nid d'abeille constituant le corps en treillis,
le composé élastomère viscoélastique comprend une huile, un élastomère thermoplastique à base de styrène, un ignifugeant bromé, et du trioxyde d'antimoine, et
dans lequel le composant huileux est contenu dans le composé élastomère viscoélastique en une quantité allant de 30 à 80 % en poids, sur la base de la composition totale.

2. Coussin en forme de treillis tridimensionnel ignifuge selon la revendication 1, dans lequel
le composé élastomère viscoélastique comprend l'ignifugeant bromé selon un rapport en poids allant de 0,10 à 0,40, et le trioxyde d'antimoine selon un rapport en poids allant de 0,03 à 0,15, sur la base du poids total de l'huile et de l'élastomère thermoplastique à base de styrène.

3. Coussin en forme de treillis tridimensionnel ignifuge selon la revendication 1 ou 2, dans lequel
le composé élastomère viscoélastique comprend l'élastomère thermoplastique à base de styrène selon un rapport en poids allant de 0,10 à 0,50 en fonction du poids de l'huile.

4. Coussin en forme de treillis tridimensionnel ignifuge selon l'une quelconque des revendications 1 à 3, dans lequel
l'élastomère thermoplastique à base de styrène présente une masse moléculaire moyenne en poids allant de 100 000 à 500 000, de préférence de 150 000 à 400 000 et plus préférentiellement de 200 000 à 350 000 en termes de polystyrène mesurée par chromatographie par perméation de gel.

5. Coussin en forme de treillis tridimensionnel ignifuge selon l'une quelconque des revendications 1 à 4, dans lequel
l'élastomère thermoplastique à base de styrène présente une teneur en styrène allant de 15 à 50 % en poids.

6. Coussin en forme de treillis tridimensionnel ignifuge selon l'une quelconque des revendications 1 à 5, dans lequel
l'ignifugeant bromé présente un point de fusion supérieur à un point de fusion de l'élastomère thermoplastique à base de styrène.

7. Coussin en forme de treillis tridimensionnel ignifuge selon l'une quelconque des revendications 1 à 6, dans lequel
l'ignifugeant bromé est un composant contenant un cycle aromatique possédant une pluralité d'atomes de brome dans la structure moléculaire.

8. Coussin en forme de treillis tridimensionnel ignifuge selon l'une quelconque des revendications 1 à 7, dans lequel
l'huile est une huile à base de paraffine.

9. Coussin en forme de treillis tridimensionnel ignifuge selon l'une quelconque des revendications 1 à 8, dans lequel
le composé élastomère viscoélastique comprend l'élastomère thermoplastique à base de styrène selon un rapport en poids allant de 5 à 30%, et de préférence de 10 à 20%.

10. Coussin en forme de treillis tridimensionnel ignifuge selon l'une quelconque des revendications 1 à 9, dans lequel
le composé élastomère viscoélastique comprend l'huile selon un rapport en poids allant de 40 à 70 % sur la base de la composition totale.

11. Coussin en forme de treillis tridimensionnel ignifuge selon l'une quelconque des revendications 1 à 10, dans lequel
le composé élastomère viscoélastique comprend l'ignifugeant bromé selon un rapport en poids allant de 0,20 à 0,30, et le trioxyde d'antimoine selon un rapport en poids allant de 0,06 à 0,10, en fonction du poids total de l'huile et de l'élastomère thermoplastique à base de styrène.

12. Coussin en forme de treillis tridimensionnel ignifuge selon l'une quelconque des revendications 1 à 11, destiné à être utilisé dans un intérieur d'automobile.
